# EUROPEAN PATENT APPLICATION

(11) **EP 4 764 956 A1**
(43) Date of publication of application: **24.06.2026**
(21) Application number: 25218012.0
(22) Date of filing: 24.11.2025
(51) Int. Cl.: G06N 3/063, G06N 3/08

(54) **ON-DEVICE-TRAINING OF NEURAL NETWORKS OPTIMISED FOR MICROCONTROLLERS**

(30) Priority: 16.12.2024 CN 202411853956
(71) Applicant: NXP B.V., 5656 AG Eindhoven (NL)
(72) Inventor: Song, Yan, 5656AG Eindhoven (NL); Xu, Peng, 5656AG Eindhoven (NL); Wang, Yinxin, 5656AG Eindhoven (NL)
(74) Representative: Colaiuda, Antonella

(57) **Abstract**

A method is provided which enables on device training of neural networks on a microcontroller device. The method comprises: initialising an artificial neural network in memory on the microcontroller device; training the artificial neural network by initialising a stack structure on the microcontroller device, and implementing the training operations required to train the neural network using the stack structure; and serialising the trained neural network in memory on the microcontroller device.

## Description

### FIELD

The invention relates to a method and system. The invention relates, particularly, but not exclusively, to a computer implemented method of configuring a microcontroller device to enable the microcontroller device to implement training of an artificial neural network.

### BACKGROUND

Microcontroller devices are typically used in automatically controlled products such as, for example automobile engine control systems, implantable medical devices, remote controls, office machinery and power tools. They have limited hardware resources which limits the computations which can be performed on these devices.

Training of neural networks on microcontroller devices is a difficult problem due to the memory requirements and existing approaches are often efficient and lack versatility.

Aspects and embodiments were conceived with the foregoing in mind.

### SUMMARY

Aspects relate to configuring microcontroller devices and may relate to configuring computing devices which host a microcontroller device or subsystem configured in accordance with the aspects.

Viewed from a first aspect, there is provided a method of configuring a microcontroller device. A microcontroller device may be described as a computing device comprising an integrated circuit which is designed to perform a specific operation. A microcontroller may include a processor, memory and input/output peripherals. The processor may be configured to execute a binary component which implements a neural network or at least part of a neural network. The method may enable the microcontroller device to implement a neural network. A neural network may be described as a model which uses interconnected nodes to process data in a way which mimics the human brain. Example neural networks may include artificial neural networks (ANNs) or convolutional neural networks (CNNs). ANNs can be hardware - (neurons are represented by physical components) or software-based (computer models) and can use a variety of topologies and learning algorithms. ANNs usually have at least three layers that are interconnected. The first layer consists of input neurons. Those neurons send data on to the second layer, referred to a hidden layer which implements a function and which in turn sends the output neurons to the third layer. There may be a plurality of hidden layers in the ANN. With respect to the number of neurons in the input layer, this parameter is based on training data.

The second or hidden layer in a neural network implements one or more functions. For example, the function or functions may each compute a linear transformation or a classification of the previous layer or compute logical functions. For instance, considering that the input vector can be represented as *x*, the hidden layer functions as *h* and the output as *y*, then the ANN may be understood as implementing a function *f* using the second or hidden layer that maps from *x* to *h* and another function *g* that maps from *h* to *y*. So the hidden layer's activation is *f(x)* and the output of the network is *g(f(x)).*

CNNs can also be hardware or software based and can also use a variety of topologies and learning algorithms. A CNN usually comprises at least one convolutional layer where a feature map is generated by the application of a kernel matrix to an input image (2D CNN) or an input vector (1D CNN). This is followed by at least one pooling layer and a fully connected layer, which deploys a multilayer perceptron which comprises at least an input layer, at least one hidden layer and an output layer. The at least one hidden layer applies weights to the output of the pooling layer to determine an output prediction.

The method may comprise initialising an neural network (for example a an artificial neural network) in memory on the microcontroller device. Initialising a neural network may comprise allocating the hardware and/or software resources required to process, store and train the neural network.

The method may comprise training the neural network. The training may be implemented using supervised, unsupervised or semi-supervised learning which are implemented using a plurality of training operations, e.g. at least one of reading from memory, writing to memory or allocating to memory which require access to memory. The training of the neural network may be implemented by initialising a software stack structure on the microcontroller device. The stack structure may comprise one or more stacks which occupy space in memory on the microcontroller device. The stack structure may comprise a plurality of stacks. The training may further comprise implementing the training operations required to train the neural network using the stack structure which may comprise, for example, writing data to the stack structure and/or using the stack structure to perform the supervised, unsupervised or semi-supervised learning.

The method may comprise serialising the trained neural network in memory on the microcontroller device. The location in memory may be distinct from the location used for the training. The memory may be non-volatile memory.

A method in accordance with the first aspect enables a neural network to be trained on a microcontroller device in a versatile and efficient way.

Optionally, the method may further comprise performing inference of the trained model in memory on the microcontroller device. The inference may be executed-in-place (XIP) without loading the trained model to RAM and parsing. The XIP inference may be implemented using NVM where the serialised model is a model object.

Optionally, serialising the trained neural network may comprise converting the trained model into a format to be stored in flash memory or random access memory. Other forms of non-volatile memory may also be used. This may be enabled by the stack structure occupying a single memory block or multiple memory blocks that have continuous address.

Optionally, the trained model is deserialised to random access memory to enable incremental training of the trained model. This enables incremental training to be performed on the neural network.

Optionally, initialising the neural network may comprise at least one of:
a. building the artificial neural network;
b. initialising the trainer;
c. initialising the data loader; or
d. initialising optimiser objects.

The trainer may be a module which manages the training process, i.e. manages the learning rate, the input of the training data, the adjustment of the weights and biases etc.

Optionally, the stack structure comprise first and second stacks in memory on the microcontroller device. That is to say, the training process is implemented using first and second stacks.

Optionally, implementing the training operations required to train the neural network using the stack structure comprises using a first stack for operations related to an object of a first type and a second stack for operations related to an object of a second type.

Optionally, wherein the object of a first type are dynamic data and the object of a second type are one or more local buffers.

Optionally, the first and second stacks may share the same memory block or memory blocks that are continuous in their addresses. This simplifies serialisation and deserialisation of the trained model.

Optionally, one of the first or second stacks may grows from top to bottom and the other of the first or second stacks grows from bottom to top. The growth describes how the operations on the stack are managed using addresses. Top to bottom indicates the growth is from higher addresses to lower addresses and bottom to top indicates the growth is from lower addresses to higher addresses.

Optionally, the training of the neural network may further comprise using a data loader to load training data into memory on the microcontroller from memory, for example, or other data sources from ADC or various buses and communication links like, for example, I2C, SPI, UART, etc.

Optionally, the trained model may be trained in random access memory. That is to say, the stack structure may be initialised in random access memory on the microcontroller device.

Optionally, serialising the trained neural network may comprise converting the trained model into a format to be stored in flash memory or random access memory and this may comprise:
serialising the trained model to a memory region; and/or
relocating all pointers of the serialised model to point to the same offset of that memory region.

Optionally, the trained model may be deserialised to random access memory to enable incremental training of the trained model further comprises relocating the embedded pointers into random access memory.

Optionally, the method may further comprises restoring trainable parameters.

Optionally, memory operations may be implemented using a self-contained single continuous memory block or multiple memory blocks that are continuous in their addresses. The memory operations may be carried out during training or inference of the neural network.

Further aspects may provide a microcontroller device configured in accordance with the first aspect. Such a microcontroller device may comprise an integrated circuit (e.g. a compact integrated circuit) designed to perform or govern a specific operation in an embedded system. Typically, a microcontroller may comprise a processor, memory and input/output peripherals on a single chip. The processor may be configured to execute an executable which contains the instructions needed to implement a neural network trained using the approach described with respect to the first aspect.

Further aspects may provide a non-transitory computer readable storage medium having stored thereon executable instructions that, as a result of being executed by a processor of a computer system, cause the computer system to at least implement a neural network trained using the method described above.

Further aspects may provide a system configured to implement the method of the first aspect.

Further aspects may provide a processing resource comprising a processor and memory including executable instructions that, as a result of execution by the processor, causes the reader to perform the method of the first aspect.

### DESCRIPTION

An embodiment will now be described by way of example only and with reference to the following drawings in which:
Figure 1 illustrates a schematic illustrating the steps associated with a method of configuring a microcontroller in accordance with the embodiment;
Figure 2 illustrates a block diagram of the modules which interact to implement a method in accordance with the embodiment;
Figure 3 illustrates schematically how first and second stacks are managed in accordance with the embodiment;
Figure 4 illustrates schematically examples of how the stack can be used;
Figure 5 illustrates the memory layout used in memory operations in accordance with the embodiment;
Figure 6 illustrates schematically how the memory is managed during serialisation of the trained model;
Figure 7 illustrates schematically how the memory is managed during inference and deserialization; and
Figure 8 illustrates batch normalisation as applied to the embodiment.

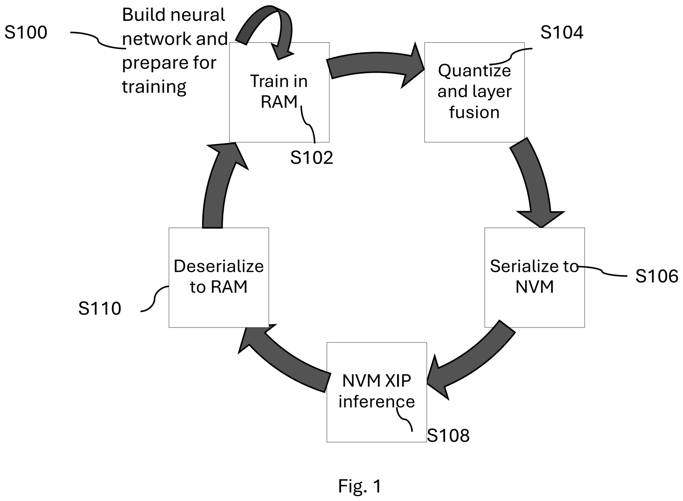

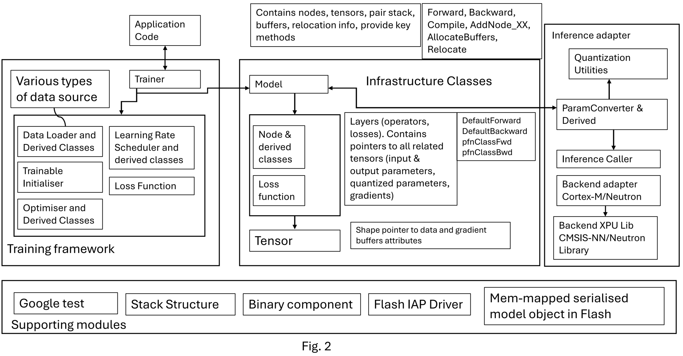

We now describe, with reference to Figures 1 to 8, how we can train and implement artificial neural network for implementation on a microcontroller device. The microcontroller device may comprise a compact integrated circuit designed to perform or govern a specific operation in an embedded system or embedded computing device. The microcontroller device may comprise a processor, memory and input and output peripherals on a single chip. The processor may be configured to execute a binary component which can implement a neural network which is trained and inferenced in accordance with the method set out below.

Figure 1 shows the steps involved in the training of such an artificial neural network (ANN), and the associated inference and incremental training. Whilst we describe with reference to an ANN, it will be appreciated that the described approach could be applied to the on-device training of a convolutional neural network (CNN) or another neural network.

In a step S100, the neural network is built and preparation for training is initialised. This involves building the neural network model, initialising the trainer, initialising the data loader and initialising the optimiser objects. One or more of the initialisation tasks (for the trainer, optimisation objects or data loader) may be implemented in the firmware of the microcontroller device. This may comprise, for example, one or more of allocating the resources in hardware and software which are required for one or more of the data loader (and derived classes related thereto), learning rate scheduler (and derived classes related thereto), initialisation of the training parameters (in the trainable initialiser), initialising the loss function (e.g. the mean square error (MSE) function), and initialising the optimiser to initialise the code which updates the trainable parameters during training of the neural network to be trained (using for example Stochastic Gradient Descent (SGD) or the Adam algorithm). The preparation for training also comprises loading the training data into the data loader so that it can be used during the training).

Step S102 may then begin in that the training of the artificial neural network (ANN) can then be initialised. This comprises initialising first and second stack structures which make up a stack structure. The first and second stack structures are initialised in RAM. The stack structure functions as a supporting module in the training of the artificial neural network. The stack structure is initialised in random access memory on the microcontroller device. The training of the artificial neural network enables a binary component to be used on the artificial neural network where the binary component represents an implementation of the trained neural network. The inference of the artificial neural network will be described later.

The training of the ANN can be implemented using any suitable approach. Examples include supervised learning, unsupervised learning or semi-supervised learning. Each approach requires a plurality of training operations which are iterated to optimise the weights and biases of the ANN so that it can be used in an inference stage prior to an implementation and possible incremental training.

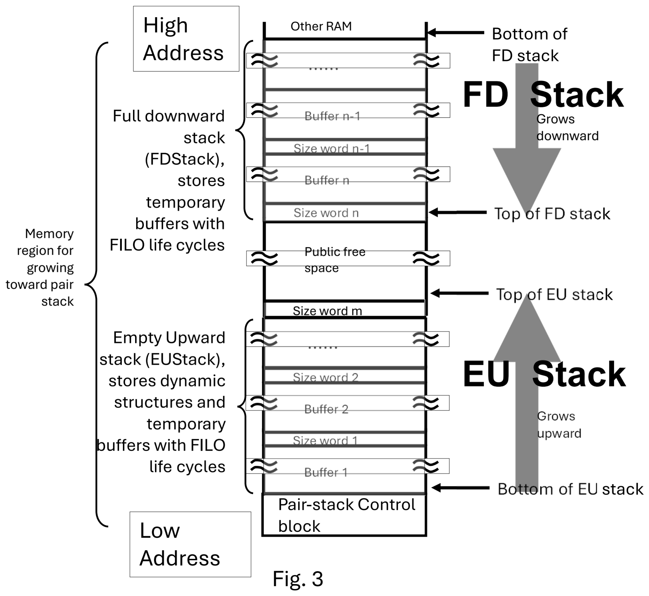

The first and second stacks are illustrated in Figure 3. The first and second stacks are two software stacks which share the same memory block. Alternatively or optionally, they can occupy different physical memory blocks provided the address is continuous. This is required for serialisation of the trained model when training is completed.

The first stack grows from top-to-bottom stack (enumerated as the FD stack) and the second stack grows from bottom to top (enumerated as the EU stack). This arrangement may also be described colloquially as a "Growing Toward Pair Stack".

Training operations which involve, for example, dynamic data structures (as an example of a first object type) are stored in the EU stack incrementally and training operations which involve, for example, temporary buffers and local buffers (as an example of a second object type) are stored in the FD stack.

Memory capacity may be borrowed from the EU stack to the FD stack from time to time in the event there is some temporarily dynamic data with a non First In Last Out (FILO) life cycle. Generally, dynamic data structures are designed such that the allocation and freeing up of stack capacity does not result in non-FILO temporary dynamic data. This can be performed provided there is no incremental dynamic data which is needed by the EU stack during this period, i.e. the period when the space needs to be borrowed.

The size of the stacks can be estimated by the users prior to the initialisation of the training of the ANN. The space between the first and second stacks, the so-called public space, is occupied on a FIFS, i.e. first-in, first service basis by the respective first and second stacks.

The use of the stack structure illustrated in Figure 3 to train the ANN provides multiple advantages. The time for allocation and freeing up training operations is O(1), i.e. the running time of the operations is constant. Multiple stack spaces can be freed-up in a single freeing up operation until a chain head is found where a chain head refers to the starting memory block of a chain, i.e. a mechanism to free multiple allocated memory blocks in a single invoke operation. There is also no requirement for dynamic heap allocation and the pair of stacks enable fast, deterministic, single continuous memory block usage. These advantages provide a further advantage of enabling memory-mapped serialisation and deserialization of training model objects to memory mapped flash memory (either on or off-chip) and further execute-in-place (XIP) inference after the completion of the training.

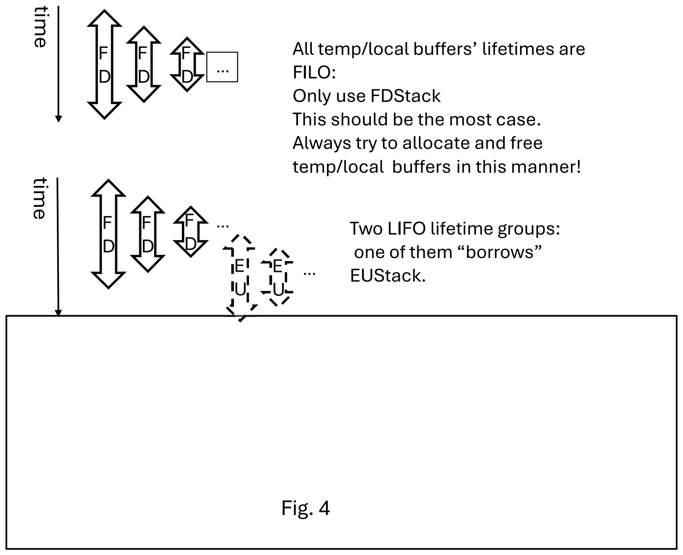

Some of the example training operations are illustrated in Figure 4. Generally speaking, all dynamically allocated structures are stored in or using the EU stack and all local buffers and local variables are stored in or using the FD stack. In short, the stack-based memory management described above could be used to replace heap-based memory management and this is key to enabling serialisation to, for example, flash memory, as a whole memory block and then subsequent XIP inference. If, for example, we used the previous heap-based new/delete and malloc/free operations then we could not guarantee the continuous addressing which is required to enable the serialisation and inference to be implemented. Heap-based memory management is also much slower.

After the training operations are complete, e.g. the weights and biases associated with the ANN are optimised, the trained model which supports the ANN can be quantized for a specific Central Processing Unit (CPU) or Neural Processing Unit (NPU) and layers are fused. This is step S104. This is to ensure efficient inference using a specific CPU or NPU. That is to say, the trained network is quantised in that the precision of the weights, biases and activations involved with the model are reduced to consume less memory. If high accuracy retention is critical, then part or all layers of the model can also be kept in floating point as well. Additionally, layer fusion can be implemented in that layers can be removed in such a way that it does not mitigate the performance.

Training can also be implemented using MRAM or ReRAM where training parameters are saved in NVM, which saves some RAM.

In a step S106, the trained model can be serialised to non-volatile memory such as, for example, flash memory or other non-volatile memory. This may comprise copying the serialised model objects into the respective non-volatile memory region and with pre-relocating all embedded pointers of the serialised model to point to the same memory offset in that memory region.

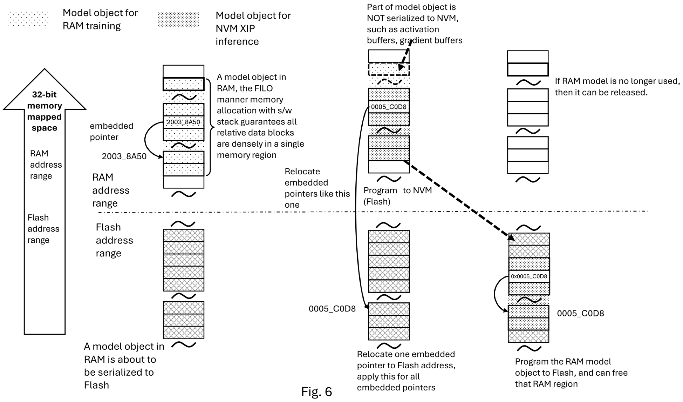

The serialisation may also comprise (as illustrated in Figure 6) allocating/deallocating (as appropriate) all model related memory blocks (e.g. tensor objects, layer objects and parameter buffers) in a First-In, Last-Out (FILO) manner and, due to the layout of the stack illustrated above, this means that all guarantees all memory blocks are within a single memory address region. If these data blocks also include pointers, those pointers also point to somewhere inside that same memory address region.

The serialisation may comprise relocating all of the embedded pointers by adding the difference between the target address to serialise and the current address of the memory region. We can then allocate to the target address. Relocation can be performed within the original memory region or, alternatively, it can be copied to an intermediate buffer. The relocation can be carried out on the intermediate buffer.

Following the relocation, the memory region that contains the model object and all its reference data can be programmed into memory mapped flash memory.

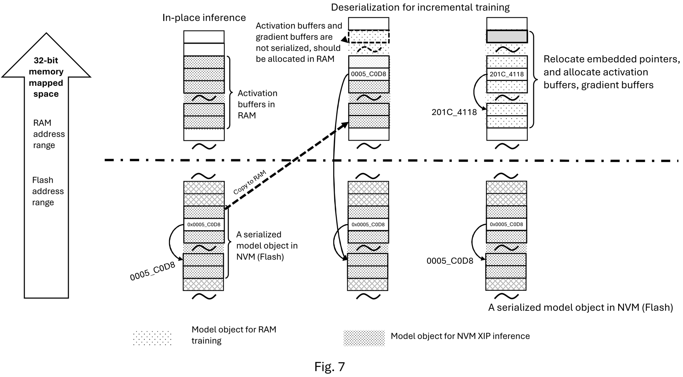

In a step S108, the inference of the trained model is executed directly from flash memory rather than copying it into RAM. This is illustrated schematically in Figure 7. That is to say, it is executed in place (otherwise described as XIP). This can be enabled as the serialised version of the model generated in step S106 is still a model object (because it was trained in RAM). The inference can be directly carried out with the serialised model object from the memory mapped flash memory. This requires memory mapped serialised media. The activation buffers may still be allocated from RAM, but during inference, we no longer need store all activation buffers, instead, we overlap them as long as their lifetimes do not overlap, this is very different from memory layout during training and can save lots of RAM. Furthermore, gradient buffers are no longer required for inference.. At this point, the model may be further quantised to leverage CPU or NPU kernels, such as, for example, Neutron NPU which is available on some NXP microcontroller parts, or common microcontroller software interface standard - neural network (CMSIS-NN) for the Cortex-M core, which can greatly reduce the memory footprint and improve performance.

Inference may be implemented using RAM where some optimisations may implement better inference performance such as batch normalisation fusing and dropout skipping.

In a step S110, the version of the model which is generated in step S108 may be deserialised back to RAM if a user provides a destination RAM address and the model object which represents the inferenced model can be copied to that destination RAM address. This is illustrated schematically in Figure 7. All of the embedded pointers can then be copied to the destination RAM. This enables incremental training to be implemented using the steps S102 onwards as described above. Trainable parameters which have been fused can also be restored. One example being fused batch normalisation.

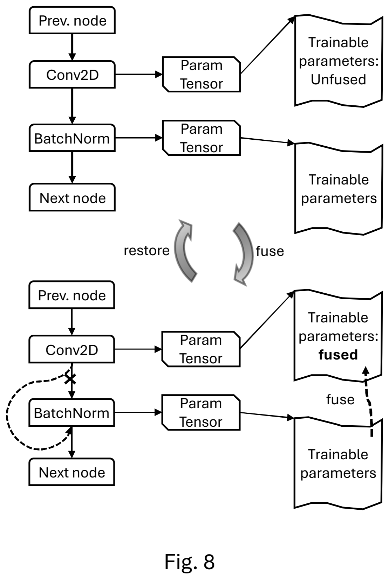

Batch normalisation may be implemented using a dedicated node in the ANN. It is illustrated schematically in Figure 8. When the model is switched from training mode to inference mode, the trainable parameters which may be identified using a "BatchNorm" code can be fused with the parameters of that Batchnorm node and, during inference, we skip the BatchNorm node to improve performance. Referring to Figure 8, example nodes include Dense, Conv2D and BatchNorm.

A batch normalisation can be fused by in-place modification of trainable parameters being fused with the respective BatchNorm node. During inference, when a fused node is being executed, we write the output directly to the output tensor of the following BatchNorm node.

After the model mode is switched back to training (i.e. following step S110), we traverse all tensors with fused parameters and unfuse them with batch normalisation parameters that are saved in the BatchNorm node.

On culmination of steps S100 to S108, the microcontroller device is then configured to implement the neural network. The microcontroller device may be part of a further computing device which hosts the microcontroller device in that it allocates jobs to the microcontroller device during its standard processing. The further computing device may be a secure computing device, a medical device, a controlling device for an automotive control system or another computing device which utilises the functionality of a microcontroller device.

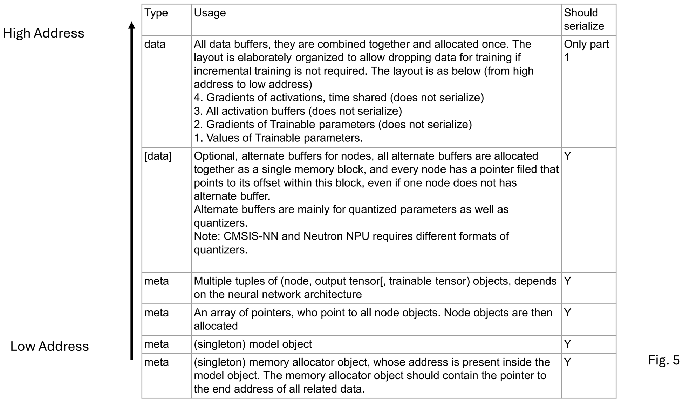

Memory operations as described with reference to this embodiment are implemented using a memory block which is illustrated in Figure 5. All data blocks are allocated by a software stack, making their address continuous.

If a model is no longer being trained, then it can be quantised and data from one address and all other higher addresses can be dropped (all gradient buffers and activation buffers during training). In the inference mode, original training parameters may be dropped and only the quantised or converted parameters may be kept.

Regarding serialisation, it may only be applied to values of trainable parameters as, for instance, gradients are not needed in the inference stage and the inference stage has different memory planning which can make the activation buffers overlap during inference whereas they do not overlap during the training.

The method described in reference to Figure 1 enables training of ANNs to be implemented on a microcontroller alongside quantisation (to a specific CPU or NPU), building, serialisation to NVM and inference (to a specific CPU or NPU) as well as deserialization to RAM.

It provides an efficient and versatile approach to memory management and neural network serialisation rather than prior art approaches which describe heap-based approaches and a wrapper format which represents neural networks.

The method describes a "Growing Toward Pair Stack" approach to memory management which can be used to replace heap based memory management to achieve reduced memory waste and deterministic allocation. It enables all related data blocks to reside continuously in a single memory address region and the serialisation of a model without requiring extra wrapper functions and models.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A method of configuring a microcontroller device to enable the microcontroller to implement an artificial neural network, the method comprising:
initialising an artificial neural network in memory on the microcontroller device;
training the artificial neural network by:
initialising a stack structure on the microcontroller device;
implementing the training operations required to train the neural network using the stack structure;
serialising the trained neural network in memory on the microcontroller device.

2. The method according to Claim 1, wherein the method further comprises:
performing inference of the trained model in memory on the microcontroller device.

3. The method according to Claim 1 or Claim 2, wherein serialising the trained neural network comprises converting the trained model into a format to be stored in flash memory or random access memory.

4. The method according to any preceding claim, wherein the trained model is deserialised to random access memory to enable incremental training of the trained model.

5. The method according to any preceding claim, wherein the stack structure comprises first and second stacks in memory on the microcontroller device.

6. The method according to Claim 5, wherein implementing the training operations required to train the neural network using the stack structure comprises using a first stack for operations related to an object of a first type and a second stack for operations related to an object of a second type.

7. The method according to Claim 6, wherein the first and second stacks share the same memory block or memory blocks that have continuous addresses.

8. The method according to Claim 6, wherein one of the first or second stacks grows from top to bottom and the other of the first or second stacks grows from bottom to top.

9. The method according to any preceding claim, wherein the trained model is trained in random access memory.

10. The method according to any one of Claims 3 to 9 wherein the wherein serialising the trained neural network comprises converting the trained model into a format to be stored in flash memory or random access memory comprises:
serialising the trained model to a memory region;
relocating all pointers of the serialised model to point to the same offset of that memory region.

11. The method according to any one of Claims 4 to 10 wherein the trained model is deserialised to random access memory to enable incremental training of the trained model further comprises relocating the embedded pointers into random access memory.

12. A microcontroller device configured in accordance with any one of claims 1 to 11.

13. A non-transitory computer readable storage medium having stored thereon executable instructions that, as a result of being executed by a processor of a computer system, cause the computer system to at least perform the method of any one of claims 1 to 11.

14. A system configured to implement the method of any one of Claims 1 to 11.

15. A processing resource comprising a processor and memory including executable instructions that, as a result of execution by the processor, causes the reader to perform the method of any one of Claims 1 to 11.
